# EUROPÄISCHE PATENTSCHRIFT

(11) **EP 1 357 066 B1**
(45) Veröffentlichungstag und Bekanntmachung des Hinweises auf die Patenterteilung: **02.02.2005**
(21) Anmeldenummer: 03008713.4
(22) Anmeldetag: 15.04.2003
(51) Int. Cl.: B65G 47/84

(54) **Vorrichtung und Verfahren zum Aufnehmen und Übergeben von Artikeln**
Device and method for receiving and transferring articles
Dispositif et procédé de réception et de transfert d'objets

(30) Priorität: 22.04.2002 DE 10217894
(43) Veröffentlichungstag der Anmeldung: 29.10.2003
(73) Patentinhaber: THEEGARTEN-PACTEC GMBH & CO. KG, 01237 Dresden (DE)
(72) Erfinder: Kmoch, Werner, 01237 Dresden (DE); Stötzner, Rolf, 01219 Dresden (DE)
(74) Vertreter: Grünecker, Kinkeldey, Stockmair & Schwanhäusser Anwaltssozietät

(56) Entgegenhaltungen:
- EP-A- 0 787 667
- EP-A- 0 805 116
- WO-A-99/14141
- DE-A- 10 017 050
- DE-U- 29 721 583
- US-A- 2 981 410

## Beschreibung

Die vorliegende Erfindung betrifft eine Vorrichtung zum Aufnehmen kleinstückiger Artikel von einer ersten Fördervorrichtung und zum Übergeben der Artikel an eine zweite Fördervorrichtung, wobei eine Rotationseinrichtung vorgesehen ist, die um eine erste Drehachse drehbar gelagert ist und einen Drehkopf mit einer Mehrzahl von in Umfangsrichtung des Drehkopfes abfolgend angeordneten Aufnahmeeinrichtungen aufweist, wobei jede Aufnahmeeinrichtung jeweils um eine zur ersten Drehachse parallele zweite Drehachse drehbar ist und eine Artikelhalteeinrichtung aufweist, die ihrerseits an der Aufnahmeeinrichtung um eine zur ersten Drehachse parallele dritten Drehachse drehbar gelagert ist.

Daneben betrifft die Erfindung ein Verfahren zum Aufnehmen kleinstückiger Artikel von einer ersten Fördervorrichtung und zum Übergeben der Artikel an eine zweite Fördervorrichtung, wobei der Artikel entlang der Förderebene zu einer Aufnahmeposition transportiert wird, an der der Artikel von einer an einem Drehkopf gelagerten Aufnahmeeinrichtung aufgenommen und unter Rotation des Drehkopfes um eine erste Drehachse aus der Aufnahmeposition in eine Abgabeposition überführt wird, und wobei der Artikel während der Überführung um die erste Drehachse und gleichzeitig, insbesondere kontinuier lich, um eine zur Drehhauptachse parallele zweite Drehachse und um eine zur Aufnahmeeinrichtungsdrehachse parallele dritte Drehachse gedreht wird.

Eine derartige Vorrichtung sowie ein derartiges Verfahren sind, insbesondere für die Handhabung von Zigarettenschachteln, aus der EP 0 805 116 A1 bekannt. Weitere Transfersysteme sind in der DE 100 17 050 A1 und der US 2,981,410 A gezeigt.

Daneben werden bei der Produktion kleinstückiger Artikel, insbesondere in der Süßwarenindustrie, wie z.B. von Hart- oder Weichkaramellen, Schokoladenstücken oder dergleichen, kontinuierlich arbeitende Maschinen eingesetzt, wobei die kleinstückigen Artikel bei den verschiedenen Produktionsschritten von einer Vorrichtung zur nächsten transportiert werden, um letztendlich als fertiges, verpacktes Produkt die Produktionsanlage zu verlassen.

Nach der Herstellung der Artikel werden diese auf eine Fördervorrichtung gelegt, um zu einer Verpackungsvorrichtung transportiert zu werden. An einer Aufnahmeposition werden die Artikel von einer Zwischenvorrichtung aufgenommen und von der ersten Fördervorrichtung wegtransportiert. An einer Übergabeposition werden die Artikel von der Zwischenvorrichtung an die zweite Fördervorrichtung übergeben, z.B. eine Verpackungsvorrichtung. Hierbei ist die Bodenfläche der Artikel zu der zweiten Fördervorrichtung gerichtet, so daß die Verpackung von dem Kopfende der Artikel her auf diese aufgebracht wird, und sie an der freiliegenden Bodenfläche der Artikel verschlossen werden. Die Verschlüsse der Verpackungen der Artikel sind somit an der Bodenfläche der Artikel angebracht.

Bei der aus der EP 0 805 116 A1 bekannten Vorrichtung stehen Halteeinrichtungen für die zu übergebenden Zigarettenschachteln radial über einen Außenrand des Transferrades über. Hierdurch besteht ein erhebliches Vertetzungs- und Gefährdungspotential.

Der Erfindung liegt daher die Aufgabe zugrunde, eine Vorrichtung sowie ein Verfahren der eingangs genannten Art derart zu verbessern, daß der Aufnahme- und Übergabevorgang in verbesserter und sicherer Weise durchführbar ist.

Hinsichtlich einer Vorrichtung wird diese Aufgabe erfindungsgemäß dadurch gelöst, daß der Drehkopf einen ersten Umfangsabschnitt und einen von diesem ersten beabstandeten zweiten Umfangsabschnitt aufweist, wobei die Aufnahmeeinrichtung zwischen den Umfangsabschnitten angeordnet ist.

Durch diese Anordnung der Aufnahmeeinrichtung zwischen zwei beabstandeten Umfangsabschnitten des Drehkopfes können einzelne radial auswärts abstehende Komponenten vermieden werden, was das Gefährdungspotential verringert.

Durch die drehbare Lagerung der Aufnahmeeinrichtung an dem Drehkopf ist es weiterhin möglich, die Aufnahmeeinrichtung relativ zu dem Drehkopf zu beschleunigen, um eine Erhöhung der Drehgeschwindigkeit der Aufnahmeeinrichtung um die erste Drehachse zu erzielen.

Nach einer bevorzugten Ausführungsform sind die beiden Umfangsabschnitte zueinander symmetrisch angeordnet und bilden einen Zwischenraum.

Nach einem weiteren bevorzugten Ausführungsbeispiel weist die Aufnahmeeinrichtung ein Gehäuse auf, wobei an einem Bodenabschnitt des Gehäuses die Aufnahmeeinrichtung durch eine Nebenwelle mit dem Drehkopf drehbar verbunden ist und an einem offenen Ende des Gehäuses die Artikelhalteeinrichtung angeordnet ist.

Dadurch wird es vorteilhafte Weise möglich, die Aufnahmeeinrichtung mit der Artikelhalteeinrichtung platzsparend anzubringen.

Nach einem weiteren bevorzugten Ausführungsbeispiel besteht die Artikelhalteeinrichtung aus einem Paar opponierend angeordneter Stempel.

Nach einem weiteren bevorzugten Ausführungsbeispiel sind die Stempel mit der Nebenwelle durch drehbar gelagerte Verbindungsstangen zum Bewegen der Stempel in axiale Richtung verbunden.

Dadurch wird es auf vorteilhafte Weise möglich, die Kraft der Artikelhalteeinrichtung zum Aufnehmen der Artikel einzustellen.

Nach einem weiteren bevorzugten Ausführungsbeispiel sind die Stempel jeweils entgegengesetzt opponierend axial relativ zueinander bewegbar.

Nach einem weiteren bevorzugten Ausführungsbeispiel sind die Verbindungsstangen durch Nockenscheiben antreibbar.

Nach einem weiteren bevorzugten Ausführungsbeispiel weist jeder Stempel jeweils eine Aufnahmefläche mit einer Gestalt auf, die zumindest teilweise einer Kontur des Artikels angepaßt ist.

Nach einem weiteren bevorzugten Ausführungsbeispiel ist die Gestalt der Aufnahmefläche der Stempel im wesentlichen konkav.

Nach einem weiteren bevorzugten Ausführungsbeispiel ist die Aufnahmeeinrichtung um eine radiale zur ersten Drehachse senkrecht orientierte Symmetrieachse des Drehkopfes drehbar.

Dadurch wird es auf vorteilhafte Weise möglich, die Lage der Artikelhalteeinrichtung zu der Lage des Drehkopfes der zweiten Fördervorrichtung anzugleichen.

Nach einem weiteren bevorzugten Ausführungsbeispiel sind die Aufnahmeeinrichtungen in gleichen Abständen zueinander am Drehkopf angeordnet, die einem Abstand zwischen den Artikeln auf der ersten Fördervorrichtung entsprechen.

Nach einem weiteren bevorzugten Ausführungsbeispiel ist die erste Fördervorrichtung ein Förderband oder eine Förderkette oder eine Kombination von beiden.

Nach einem weiteren bevorzugten Ausführungsbeispiel weist die zweite Fördervorrichtung eine Mehrzahl an Greiferköpfen auf, die um eine Drehachse in entgegengesetzter Drehrichtung zu der Rotationseinrichtung drehbar gelagert ist.

Nach einem weiteren bevorzugten Ausführungsbeispiel sind die Greiferköpfe in Abständen zueinander angeordnet, die den Abständen zwischen den Aufnahmeeinrichtungen am Drehkopf gleichen.

Nach einem weiteren bevorzugten Ausführungsbeispiel weist der Artikel in der Abgabeposition eine gegenüber der Aufnahmeposition um die zweite Drehachse gedrehte Position auf, derart, daß ein Kopfende des Artikels im wesentlichen radial auswärts weist.

Nach einem weiteren bevorzugten Ausführungsbeispiel weist der Artikel in der Abgabeposition eine gegenüber der Aufnahmeposition um die zweite Drehachse gedrehte Position auf, derart, daß eine Seitenfläche des Artikels im wesentlichen radial auswärts weist.

Hinsichtlich eines Verfahrens wird die Aufgabe erfindungsgemäß dadurch gelöst, daß die Aufnahmeeinrichtung zwischen zwei voneinander beabstandeten Umfangsabschnitten des Drehkopfes angeordnet sind. Auch hierdurch kann die Artikelübergabe gegenüber den bekannten Verfahren verbessert werden.

Nach einem bevorzugten Ausführungsbeispiel wird der Artikel von der Aufnahmeposition bis zu der Abgabeposition im wesentlichen 180° um die zweite Drehachse gedreht.

Nach einem weiteren bevorzugten Ausführungsbeispiel wird der Artikel von der Aufnahmeposition bis zu der Abgabeposition im wesentlichen 90° um die erste Drehachse gedreht.

Nach einem weiteren bevorzugten Ausführungsbeispiel wird entlang der kreisförmigen Bewegungsbahn der Artikel, bezogen auf die dritte Drehachse, in einer Richtung und bezogen auf die erste und die zweite Drehachse in zu dieser entgegengesetzten Richtung gedreht.

Nach einem weiteren bevorzugten Ausführungsbeispiel wird entlang der kreisförmigen Bewegungsbahn die Aufnahmeeinrichtung gleichzeitig um die zweite Drehachse und um eine zu dieser senkrecht orientierten Symmetrieachse des Drehkopfes gedreht.

Weitere vorteilhafte Ausgestaltungen des erfindungsgemäßen Verfahrens und der erfindungsgemäßen Vorrichtung sind in den übrigen Unteransprüchen dargelegt.

Die Erfindung wird nachstehend anhand von Ausführungsbeispielen und zugehörigen Zeichnungen näher erläutert. In diesen zeigen:
- Fig. 1: eine Darstellung einer Anordnung der Fördervorrichtungen in Bezug aufeinander,
- Fig. 2: eine Schnittansicht entlang der Längsachse eines Rotationskopfes,
- Fig. 3: eine Schnittansicht eines erfindungsgemäßen Rotationskopfes,
- Fig. 4: eine Schnittansicht entlang der Längsachse eines erfindungsgemäßen Rotationskopfes.

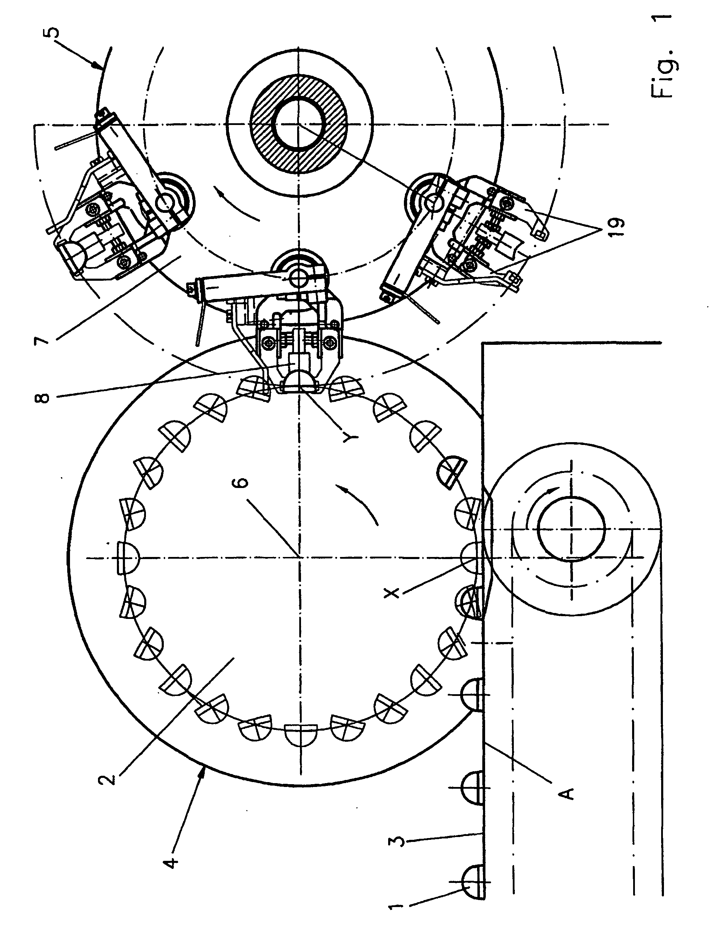

Nachfolgend wird ein Verfahren und eine Vorrichtung zum Aufnehmen kleinstückiger Artikel von einer ersten Fördervorrichtung und zum Übergeben der Artikel an eine zweite Fördervorrichtung nach einem Ausführungsbeispiel der Erfindung unter Bezugnahme auf die Fig. 1 bis 4 erläutert, wobei die Vorrichtung im vorliegenden Fall zum Aufnehmen und Übergeben kleinstückiger Artikel mit jeweils einer geraden Bodenfläche und jeweils einem halbkreisförmigen Kopfende ausgelegt ist, ohne hierauf beschränkt zu sein.

In Fig. 1 ist eine Vorrichtung (Aufnahmevorrichtung) zum Aufnehmen kleinstückiger Artikel 1 von einer ersten Fördervorrichtung 3 und zum Übergeben der Artikel an eine zweite Fördervorrichtung 5 dargestellt. Hierbei wird gezeigt, wie die Artikel 1 von der ersten Fördervorrichtung 3 durch die Aufnahmevorrichtung aufgenommen und weg transportiert werden, um dann an die zweite Fördervorrichtung 5 abgeben zu werden.

Im folgenden wird anhand der Fig. 1 das Zusammenwirken der Aufnahmevorrichtung mit der ersten und zweiten Fördervorrichtung 3,5 geschildert.

Die Artikel 1 werden mit der Bodenfläche in eine Förderebene A der ersten Fördervorrichtung 3 gelegt, die in der Fig. 1 als Förderband dargestellt ist, ohne hierauf beschränkt zu sein, und zu der Aufnahmevorrichtung hin transportiert. Die Aufnahmevorrichtung weist eine Rotationseinrichtung 4 auf, die um eine erste Drehachse 6 drehbar gelagert ist und einen Drehkopf 2 mit einer Mehrzahl von Aufnahmeeinrichtungen 9 aufweist, wobei die Aufnahmeeinrichtungen 9 jeweils zum Aufnehmen eines Artikels 1 vorgesehen und jeweils um eine eigene zweite Drehachse 6a drehbar gelagert sind, die parallel zu der ersten Drehachse 6 ist. Die Aufnahmeeinrichtungen 9 sind in Umfangsrichtung des Drehkopfes 2 abfolgend angeordnet. Hierbei kommen die Aufnahmeeinrichtungen 9 des Drehkopfes 2 in eine Aufnahmeposition X mit der ersten Fördervorrichtung 3 in Kontakt. In der Aufnahmeposition X wird der Artikel 1 durch die Aufnahmeeinrichtung 9 aufgenommen und um die erste Drehachse 6 entlang einer kreisförmigen Bewegungsbahn von der Förderebene A der ersten Fördervorrichtung 3 in eine Abgabeposition Y überführt. Die Abgabeposition Y, in der der Artikel 1 von der Rotationseinrichtung 4 an die zweite Fördervorrichtung 5 abgegeben wird, liegt in einer Abgabeebene B, die im wesentlichen senkrecht zu der Förderebene A der ersten Fördervorrichtung 3 ist.

Entlang der kreisförmigen Bewegungsbahn um die erste Drehachse 6 wird der Artikel 1 gleichzeitig zu der Transportbewegung auf der Bewegungsbahn im wesentlichen kontinuierlich um eine dritte Drehachse 6b gedreht. Hierbei stellt die erste Drehachse 6 sowohl die Hauptachse der Bewegungsbahn als auch die Drehachse 6 der Rotationseinrichtung 4 dar. Des weiteren ist die dritte Drehachse 6b des Artikels 1 parallel zu der ersten Drehachse 6 der Rotationseinrichtung 4 und stellt außerdem zugleich die zweite Drehachse 6a der Aufnahmeeinrichtung 9 dar. Durch diese Drehbewegung des Artikels 1 entlang der Bewegungsbahn kann in der Abgabeposition Y die Kopffläche des Artikels 1 durch eine konkave Ausformung 8 eines Greiferkopfes 7 der zweiten Fördervorrichtung 5 erfaßt werden. Zusätzlich greifen zumindest zwei Greifern an die beiden Seiten des Artikels 1, die an dem Greiferkopf 7 der zweiten Fördervorrichtung 5 vorgesehen sind, so daß der Artikel 1 durch die zweite Fördervorrichtung 5 übernommen werden kann. Hierbei entspricht die konkave Ausformung des Greiferkopfes 7 die Form des Kopfendes des Artikels 1.

Somit wird deutlich, daß entlang der kreisförmigen Bewegungsbahn von der Aufnahmeposition X bis zu der Abgabeposition Y der Artikel 1 im wesentlichen 180° um die dritte Drehachse 6b gedreht wird und dabei gleichzeitig im wesentlichen 90° um die erste Drehachse 6 der kreisförmigen Bewegungsbahn bzw. der Rotationseinrichtung 4.

Hierbei wird bevorzugterweise der Artikel 1 entlang der kreisförmigen Bewegungsbahn, bezogen auf die dritte Drehachse 6b, im Uhrzeigersinn gedreht, wobei die Aufnahmeeinrichtung 9 mit dem Artikel 1, bezogen auf die erste Drehachse 6 der Rotationseinrichtung 4, im entgegengesetzten Uhrzeigersinn gedreht wird. Durch die entgegengesetzte Drehrichtung des Drehkopfes 2 um die erste Drehachse 6 zu der Aufnahmeeinrichtung 9 mit dem Artikel 1 um die dritte Drehachse 6b, die parallel zu der ersten Drehachse 6 ist, wird vorteilhafterweise ein Schwingen der gesamten Rotationsvorrichtung 4 verhindert. Außerdem wird durch das Einstellen dieser entgegengesetzten Drehung eine Verkürzung des Weges zwischen der Aufnahmeposition X und der Abgabeposition Y bewirkt.

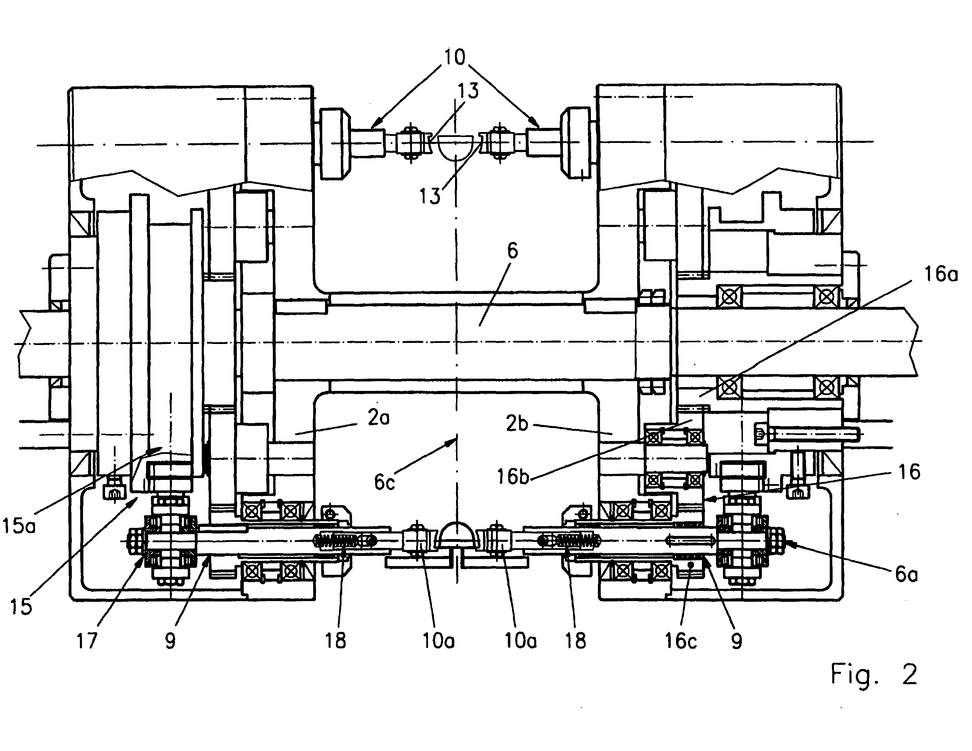

In der Fig. 2 ist eine Schnittansicht entlang der Längsachse des Drehkopfes 2 dargestellt. Der Drehkopf 2 ist drehbar um eine ruhende erste Drehachse 6 gelagert, wobei die erste Drehachse 6 Nockenfolger- und Zahnradantriebsmittel 15,16 aufweist. Dabei ist der Drehkopf 2 symmetrisch zu einer Symmetrieachse 6c angeordnet, die senkrecht zu der ersten Drehachse 6 ist. Zusätzlich weist der Drehkopf 2 einen ersten Umfangsabschnitt 2a und einen diesem ersten beabstandeten zweiten Umfangsabschnitt 2b auf, die im wesentlichen senkrecht zu der ersten Drehachse 6 sind und einen Zwischenraum bilden. An diesen Umfangsabschnitten 2a,2b des Rotationskopfes 2 ist eine Mehrzahl von Aufnahmeeinrichtungen 9 angeordnet, die jeweils dazu dienen, die in der Förderebene A der ersten Fördervorrichtung 3 befindlichen Artikel 1 zu erfassen und aufzunehmen, um die Artikel 1 von der ersten Fördervorrichtung 3 zu der zweiten Fördervorrichtung 5 zu transportieren. Hierbei sind die Aufnahmeeinrichtungen 9 in gleichen Abständen zueinander am Drehkopf 2 angeordnet, wobei die Anordnungsabstände einem Abstand zwischen den Artikeln 1 auf der ersten Fördervorrichtung 3 entsprechen.

Die Aufnahmeeinrichtung 9 besteht aus einem Paar in einem Gehäuse des Drehkopfes 2 drehbar um eine zweite Drehachse 6a, die parallel zu der ersten Drehachse 6 ist, gelagerten Artikelhalteeinrichtungen 10, die jeweils eine Bohrung auf der zu dem Artikel 1 gerichteten Seite und eine Folgereinheit 17 auf der entgegengesetzten Seite aufweisen. Hierbei besteht das Gehäuse des Drehkopfes 2 zum Teil aus den bereits erwähnten Umfangsabschnitten 2a,2b. Des weiteren weist die Artikelhalteeinrichtung 10 einem Paar von Stempeln 10a auf, die gegenüberliegend symmetrisch und jeweils in der jeweiligen Bohrung der Artikelhalteeinrichtungen 10 angeordnet sind. Dabei sind die Stempel 10a jeweils durch eine in der Bohrung der Artikelhalteeinrichtungen 10 befindlichen Schraubenfeder 18 axial zu der Aufnahmeeinrichtungsdrehachse 6a der Aufnahmeeinrichtung 9 verschiebbar verbunden. Die Stempel 10a weisen jeweils eine Aufnahmefläche mit einer Gestalt 13 auf, die zumindest teilweise einer Kontur des Artikels 1 angepaßt ist. Hierbei ist die Gestalt der Aufnahmefläche 13 der Stempel 10a im wesentlichen konkav.

Die auf den jeweiligen Artikelhalteeinrichtungen 10 fest montierten Folgereinheiten 17 sind mit einer um die erste Drehachse 6 drehbar gelagerten Nockenscheibe 15a in Eingriff, so daß es möglich ist, durch das Nockenfolgerantriebsmittel 15 die Artikelhalteeinrichtungen 10 der Aufnahmeeinrichtung 9 jeweils relativ entgegengesetzt zueinander in axiale Richtung zu bewegen, wodurch die Aufnahme der Artikel 1 durch die Stempel 10a ermöglicht wird. Des weiteren sind die Artikelhalteeinrichtungen 10 durch eine auf den jeweiligen Artikelhalteeinrichtungen 10 fest montierten Zahnradbuchse 16c über einem auf einer Mittelwelle drehbar gelagerten Übertragungszahnrad 16b mit einem um die erste Drehachse 6 drehbar gelagerten Antriebszahnrad 16a in Eingriff, wodurch die Artikelhalteeinrichtungen 10 über die Zahnradantriebsmittel 16 in entgegengesetzte Richtung zu dem Drehkopf 2 drehbar sind.

Somit ist es möglich, die Artikel 1 von der Förderebene A der ersten Fördervorrichtung 3 zu der Abgabeebene B der zweiten Fördervorrichtung 5 mit der Drehung des Drehkopfes 2 um die erste Drehachse 6 zu überführen und dabei die Artikel 1 von der Aufnahmeposition X in die Abgabeposition Y mit der Drehung der Aufnahmeeinrichtung 9 mit den verbundenen Artikelhalteeinrichtungen 10 durch das Zahnradantriebsmittel 16 in eine vorgegebene Abgabelage zu der zweiten Fördervorrichtung 5 zu bringen.

Die zweite Fördervorrichtung 5 weist eine Mehrzahl an Greiferköpfen 7 auf, die um eine Drehachse in entgegengesetzter Richtung zu der Rotationseinrichtung 4 drehbar gelagert ist, d.h. daß die Rotationseinrichtung 4 im entgegengesetzten Uhrzeigersinn und die zweite Fördervorrichtung 5 im Uhrzeigersinn gedreht werden.

Die Greiferköpfe 7 sind in Abständen zueinander angeordnet, die den Abständen zwischen den Aufnahmeeinrichtungen 9 am Drehkopf 2 gleichen. Hierbei weisen die Greiferköpfe 7 jeweils ein Paar opponierend axial bewegbar angeordnete Greifer 19 auf, wobei jedes Paar der Greifer 19 im wesentlichen senkrecht zu den zweiten Drehachsen 6a der Aufnahmeeinrichtungen 9 angeordnet sind. Zusätzlich weisen die Greiferköpfe 7 jeweils eine konkave Ausformung 8 auf, die zwischen den Greifern 19 vorgesehen ist, um das Kopfende der Artikel 1 zu erfassen.

Durch den Aufbau der Vorrichtungen kommen in der Abgabeposition Y jeweils eine Aufnahmeeinrichtung 9 mit einem Greiferkopf 7 derart in Kontakt, daß die Greifer 19 senkrecht zu den Artikelhalteeinrichtungen 10 an die Seite der Artikel 1 greifen und gleichzeitig mit der konkaven Ausformung 8 das Kopfende der Artikel 1 erfassen, um den Artikel 1 von der Rotationseinrichtung 4, insbesondere von den Stempeln 10a der Artikelhalteeinrichtung 10 der Aufnahmeeinrichtung 9 abzunehmen und wegzuführen. Zusätzlich wird die Aufnahmeeinrichtung 9 nach einer ganzen Umdrehung des Drehkopfes 2 um die erste Drehachse 6 wieder in die Ausgangslage gebracht. Dabei dreht sich die Aufnahmeeinrichtung 9 um die eigene zweite Drehachse 6a.

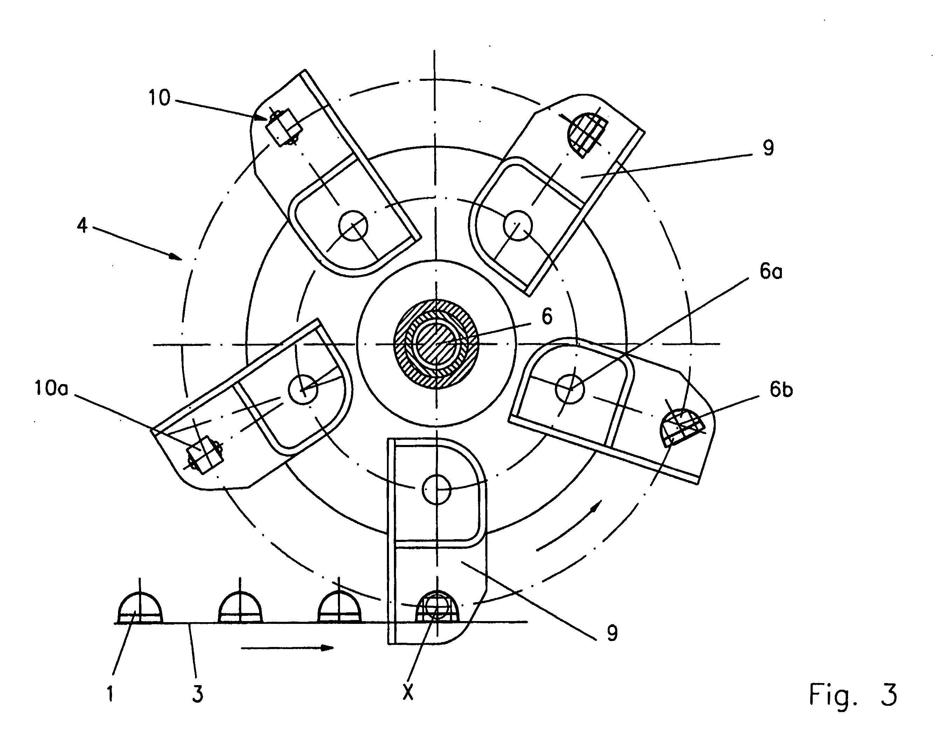

Die Fig. 3 zeigt eine Schnittansicht eines erfindungsgemäßen Drehkopfes 2 im Zusammenwirken mit der zweiten Fördervorrichtung 3. Am Drehkopf 2 sind, ohne einschränkend zu wirken, fünf Aufnahmeeinrichtungen 9 angeordnet, die mit dem Drehkopf 2 um die erste Drehachse 6 drehbar sind. Hierbei sind die Aufnahmeeinrichtungen 9 selbst jeweils um eine zweite Drehachse 6a drehbar angeordnet. An einem radial äußeren Ende einer jeweiligen Aufnahmeeinrichtung 9 ist ein Stempel 10a der Artikelhalteeinrichtung 10 gezeigt. Der Stempel 10a der Artikelhalteeinrichtung 10 ist um eine dritte Drehachse 6b drehbar gelagert. Die dritte, zweite und erste Drehachse 6b,6a,6 sind parallel und beabstandet zueinander angeordnet.

Im folgenden wird das Zusammenwirken der Aufnahmeeinrichtung 9 des Drehkopfes 2 der Rotationseinrichtung 4 mit der ersten Fördervorrichtung 3 beschrieben.

Der kleinstückige Artikel 1 wird mit der ersten Fördervorrichtung 3 zu einer Aufnahmeposition X transportiert, an der der Artikel 1 mit der Aufnahmeeinrichtung 9 des Drehkopfes 2 in Kontakt kommt. Die axial bewegbaren Stempel 10a der Artikelhalteeinrichtung 10 greifen den Artikel 1 seitlich und bewegt den Artikel 1 durch die Drehbewegung des Drehkopfes 2 weg von der ersten Fördervorrichtung 3.

Während der Drehbewegung des Drehkopfes 2 um die erste Drehachse 6 wird die Aufnahmeeinrichtung 9 mit dem Artikel 1 entlang einer Kreisbahn bewegt. Zusätzlich zu dieser Drehbewegung um die erste Drehachse 6 führt die Aufnahmeeinrichtung 9 eine Schwenkbewegung um die zweite Drehachse 6a aus, wodurch eine zusätzliche Beschleunigung der Bewegung des Artikel 1 entlang der kreisförmigen Bewegungsbahn stattfindet. Des weiteren wird der Artikel 1 durch die Artikelhalteeinrichtung 10 um die eigene dritte Drehachse 6b während der Bewegung entlang der kreisförmigen Bewegungsbahn gedreht, um in einer vorbestimmten Abgabelage gegenüber der zweiten Fördervorrichtung 5 zu gelangen.

Die Artikelhalteeinrichtung 10 mit dem Artikel 1 wird bevorzugterweise in entgegengesetzter Richtung zu der Drehrichtung des Drehkopfes 2 gedreht, wodurch eine Verkür zung des Weges des Artikels 1 während der Drehung um die erste Drehachse 6 zwischen der ersten und der zweiten Fördervorrichtung 3,5 erreicht wird.

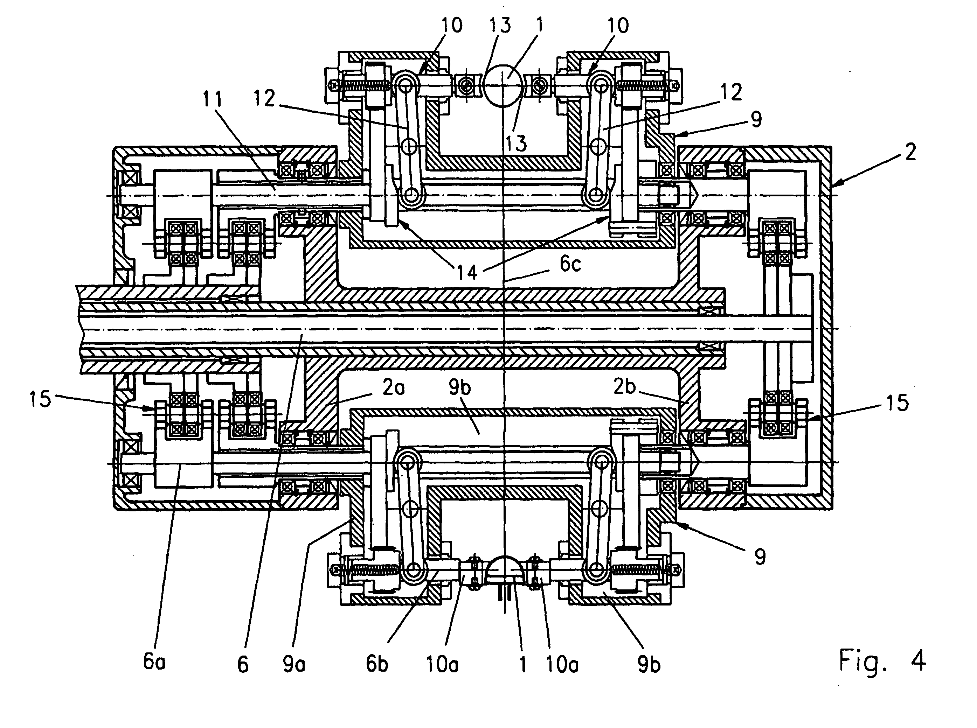

In der Fig. 4 ist eine Schnittansicht des Drehkopfes 2 entlang der axialen ersten Drehachse 6 gezeigt. Der Drehkopf 2 eines bevorzugten Ausführungsbeispiels weist einen ersten Umfangsabschnitt 2a und einen von diesem ersten beabstandeten zweiten Umfangsabschnitt 2b auf, wobei die beiden Abschnitte 2a, 2b zueinander symmetrisch zu einer Symmetrieachse 6c angeordnet sind und einen Zwischenraum bilden. In dem Zwischenraum ist die Aufnahmeeinrichtung 9 drehbar angeordnet, wobei die Aufnahmeeinrichtung 9 durch eine Nebenwelle 11 mit dem Drehkopf 2 verbunden ist. Die Nebenwelle 11 ist wiederum über Antriebseinheiten 15 mit der ersten Drehachse 6 verbunden.

Die Aufnahmeeinrichtung 9 weist ein Gehäuse 9a auf, an dessen Bodenabschnitt 9b die Nebenwelle 11 angeordnet ist und an dessen offenem Ende die Artikelhalteeinrichtung 10 angeordnet ist. Hierbei hat das Gehäuse 9a eine U-profilierte Form.

Die Artikelhalteeinrichtung 10 besteht aus einem Paar opponierend angeordneter Stempel 10a. Die Stempel 10a sind mit der Nebenwelle 11 durch an ihren Enden drehbar gelagerte Verbindungsstangen 12 verbunden, wobei die Verbindungsstangen 12 durch an der Mittelwelle angeordnete Nockenscheiben 14 antreibbar sind, wodurch die Stempel 10a jeweils entgegengesetzt opponierend axial relativ zueinander bewegbar sind.

Da die Stempel 10a drehbar in dem Gehäuse 9a der Aufnahmeeinrichtung 9 um die dritte Drehachse 6b gelagert sind, die Aufnahmeeinrichtung 9 an dem Drehkopf 2 drehbar um die zweite Drehachse 6a gelagert ist und der Drehkopf 2 drehbar um die erste Drehachse 6 gelagert ist, ist es möglich, daß der Artikel 1 während der Bewegung entlang der kreisförmigen Bewegungsbahn von der Aufnahmeposition X zu der Abgabeposition Y sich um drei verschiedene Drehachsen dreht, d.h. der Artikel 1 wird während der Bewegung entlang der kreisförmigen Bewegungsbahn durch die Artikelhalteeinrichtung 10 um die dritte Drehachse 6b, zusätzlich durch die Aufnahmeeinrichtung 9 um die zweite Drehachse 6a und durch den Drehkopf 2 um die erste Drehachse 6 gedreht.

In einem in den Figuren nicht gezeigten Ausführungsbeispiel ist die Aufnahmeeinrichtung 9 derart an dem Drehkopf 2 angeordnet, daß die Aufnahmeeinrichtung 9 um die Symmetrieachse 6c drehbar ist, wobei die Symmetrieachse 6c senkrecht zu der ersten Drehachse 6 ist .

Dadurch ist es möglich, nach der Aufnahme des Artikels 1 durch die Artikelhalteeinrichtung 10 während der Bewegung entlang der kreisförmigen Bewegungsbahn von der Aufnahmeposition X zu der Abgabeposition Y um die dritte Drehachse 6b des Artikels 1, die zweite Drehachse 6a der Aufnahmeeinrichtung 9, die erste Drehachse 6 des Drehkopfes 2 und zusätzlich um die Symmetrieachse 6c des Drehkopfes 2 zu drehen.

Somit ist die Lage des Artikels 1 in der Abgabeposition Y mit Bezug auf die Greiferköpfe 7 der zweiten Fördervorrichtung 5 beliebig variabel anpassbar.

## Patentansprüche

1. Vorrichtung zum Aufnehmen kleinstückiger Artikel (1) von einer ersten Fördervorrichtung (3) und zum Übergeben der Artikel (1) an eine zweite Fördervorrichtung (5), wobei eine Rotationseinrichtung (4) vorgesehen ist, die um eine erste Drehachse (6) drehbar gelagert ist und einen Drehkopf (2) mit einer Mehrzahl von in Umfangsrichtung des Drehkopfes (2) abfolgend angeordneten Aufnahmeeinrichtungen (9) aufweist, wobei jede Aufnahmeeinrichtung (9) jeweils um eine zur ersten Drehachse (6) parallele zweite Drehachse (6a) drehbar ist und eine Artikelhalteeinrichtung (10) aufweist, die ihrerseits an der Aufnahmeeinrichtung (9) um eine zur ersten Drehachse (6) parallele dritten Drehachse (6b) drehbar gelagert ist,
**dadurch gekennzeichnet, daß** der Drehkopf (2) einen ersten Umfangsabschnitt (2a) und einen von diesem ersten beabstandeten zweiten Umfangsabschnitt (2b) aufweist, wobei die Aufnahmeeinrichtung (9) zwischen den Umfangsabschnitten (2a,2b) angeordnet ist.

2. Vorrichtung nach Anspruch 1, **dadurch gekennzeichnet, daß** die beiden Abschnitte (2a,2b) zueinander symmetrisch angeordnet sind und einen Zwischenraum bilden.

3. Vorrichtung nach einem der Ansprüche 1 oder 2, **dadurch gekennzeichnet, daß** die Aufnahmeeinrichtung (9) ein Gehäuse (9a) aufweist, wobei an einem Bodenabschnitt (9b) des Gehäuses (9a) die Aufnahmeeinrichtung (9) durch eine Nebenwelle (11) mit dem Drehkopf (2) drehbar verbunden ist.

4. Vorrichtung nach Anspruch 3, **dadurch gekennzeichnet, daß** an einem offenen Ende des Gehäuses (9a) die Artikelhalteeinrichtung (10) angeordnet ist.

5. Vorrichtung nach zumindest einem der Ansprüche 1 bis 4, **dadurch gekennzeichnet, daß** die Artikelhalteeinrichtung (10) aus einem Paar opponierend angeordneter Stempel (10a) besteht.

6. Vorrichtung nach Anspruch 5, **dadurch gekennzeichnet, daß** die Stempel (10a) mit der Nebenwelle (11) durch drehbar gelagerte Verbindungsstangen (12) zum Bewegen der Stempel (10a) in axiale Richtung verbunden sind.

7. Vorrichtung nach Anspruch 5 oder 6, **dadurch gekennzeichnet, daß** die Stempel (10a) jeweils entgegengesetzt opponierend axial relativ zueinander bewegbar sind.

8. Vorrichtung nach Anspruch 6 oder 7, **dadurch gekennzeichnet, daß** die Verbindungsstangen (12) durch Nockenscheiben (14) antreibbar sind.

9. Vorrichtung nach zumindest einem der Ansprüche 5 bis 8, **dadurch gekennzeichnet, daß** jeder Stempel (10a) jeweils eine Aufnahmefläche (13) mit einer Gestalt aufweist, die zumindest teilweise einer Kontur des Artikels (1) angepaßt ist.

10. Vorrichtung nach zumindest einem der Ansprüche 5 bis 9, **dadurch gekennzeichnet, daß** die Gestalt der Aufnahmefläche (13) der Stempel (10a) im wesentlichen konkav ist.

11. Vorrichtung nach zumindest einem der Ansprüche 1 bis 10, **dadurch gekennzeichnet, daß** die Aufnahmeeinrichtung (9) um eine radiale zur ersten Drehachse (6) senkrecht orientierte Symmetrieachse (6c) des Drehkopfes (2) drehbar ist.

12. Vorrichtung nach zumindest einem der Ansprüche 1 bis 11, **dadurch gekennzeichnet, daß** die Aufnahmeeinrichtungen (9) in gleichen Abständen zueinander am Drehkopf (2) angeordnet sind, die einem Abstand zwischen den Artikeln (1) auf der ersten Fördervorrichtung (3) entsprechen.

13. Vorrichtung nach zumindest einem der Ansprüche 1 bis 12 **dadurch gekennzeichnet, daß** die erste Fördervorrichtung (3) ein Förderband oder eine Förderkette oder eine Kombination von beiden ist.

14. Vorrichtung nach zumindest einem der Ansprüche 1 bis 13, **dadurch gekennzeichnet, daß** die zweite Fördervorrichtung (5) eine Mehrzahl an Greiferköpfen (7) aufweist, die um eine Drehachse in entgegengesetzter Drehrichtung zu der Rotationseinrichtung (4) drehbar gelagert ist.

15. Vorrichtung nach Anspruch 14, **dadurch gekennzeichnet, daß** die Greiferköpfe (7) in Abständen zueinander angeordnet sind, die den Abständen zwischen den Aufnahmeeinrichtungen (9) am Drehkopf (2) entsprechen.

16. Vorrichtung nach zumindest einem der Ansprüche 1 bis 15 **dadurch gekennzeichnet, daß** der Artikel (1) in der Abgabeposition (Y) eine gegenüber der Aufnahmeposition (X) um die zweite Drehachse (6a) gedrehte Position aufweist, derart, daß ein Kopfende des Artikels (1) im wesentlichen radial auswärts weist.

17. Vorrichtung nach zumindest einem der Ansprüche 1 bis 15, **dadurch gekennzeichnet, daß** der Artikel (1) in der Abgabeposition (Y) eine gegenüber der Aufnahmeposition (X) um die zweite Drehachse (6a) gedrehte Position aufweist, derart, daß eine Seitenfläche des Artikels (1) im wesentlichen radial auswärts weist.

18. Verfahren zum Aufnehmen kleinstückiger Artikel (1) von einer ersten Fördervorrichtung (3) und zum Übergeben der Artikel (1) an eine zweite Fördervorrichtung (5), wobei der Artikel (1) entlang der Förderebene (A) zu einer Aufnahmeposition (X) transportiert wird, an der der Artikel (1) von einer an einem Drehkopf (2) gelagerten Aufnahmeeinrichtung (9) aufgenommen und unter Rotation des Drehkopfes (2) um eine erste Drehachse (6) aus der Aufnahmeposition (X) in eine Abgabeposition (Y) überführt wird, und wobei der Artikel (1) während der Überführung um die erste Drehachse (6) und gleichzeitig, insbesondere kontinuierlich, um eine zur Drehhauptachse (6) parallele zweite Drehachse (6a) und um eine zur Aufnahmeeinrichtungsdrehachse (6a) parallele dritte Drehachse (6b) gedreht wird, **dadurch gekennzeichnet, daß** die Aufnahmeeinrichtung zwischen zwei voneinander beabstandeten Umfangsabschnitten (2a, 2b) des Drehkopfes (2) angeordnet sind.

19. Verfahren nach Anspruch 18, **dadurch gekennzeichnet, daß** der Artikel (1) von der Aufnahmeposition (X) bis zu der Abgabeposition (Y) im wesentlichen 180° um die zweite Drehachse (6a) gedreht wird.

20. Verfahren nach Anspruch 18 oder 19, **dadurch gekennzeichnet, daß** der Artikel (1) von der Aufnahmeposition (X) bis zu der Abgabeposition (Y) im wesentlichen 90° um die erste Drehachse (6) gedreht wird.

21. Verfahren nach zumindest einem der Ansprüche 18 bis 20, **dadurch gekennzeichnet, daß** entlang der kreisförmigen Bewegungsbahn der Artikel (1), bezogen auf die dritte Drehachse (6b), in einer Richtung und bezogen auf die erste und die zweite Drehachse (6,6a) in zu dieser entgegengesetzten Richtung gedreht wird.

22. Verfahren nach zumindest einem der Ansprüche 18 bis 21 **dadurch gekennzeichnet, daß** entlang der kreisförmigen Bewegungsbahn die Aufnahmeeinrichtung (9) gleichzeitig um die zweite Drehachse (6a) und um eine zu dieser senkrecht orientierten Symmetrieachse (6c) des Drehkopfes (2) gedreht wird.

## Claims

1. Device for receiving small-size articles (1) from a first conveying device (3) and for transferring the articles (1) to a second conveying device (5), wherein a rotation device (4) is provided, which is mounted to be rotatable about a first axis (6) of rotation and comprises a rotary head (2) with a plurality of receiving devices (9) arranged in succession in circumferential direction of the rotary head (2), wherein each receiving device (9) is rotatable about a respective second axis (6a) of rotation parallel to the first axis (6) of rotation and comprises an article holding device (10), which in turn is mounted at the receiving device (9) to be rotatable about a third axis (6b) of rotation parallel to the first axis (6) of rotation, **characterised in that** the rotary head (2) has a first circumferential section (2a) and a second circumferential section (2b) spaced from this first section, wherein the receiving device (9) is arranged between the circumferential sections (2a, 2b).

2. Device according to claim 1, **characterised in that** the two sections (2a, 2b) are arranged symmetrically relative to one another and form an intermediate space.

3. Device according to one of claims 1 and 2, **characterised in that** the receiving device (9) comprises a housing (9a), wherein the receiving device (9) is rotatably connected at a base section (9b) of the housing (9a) with the rotary head (2) by an auxiliary shaft (11).

4. Device according to claim 3, **characterised in that** the article holding device (10) is arranged at an open end of the housing (9a).

5. Device according to at least one of claims 1 to 4, **characterised in that** the article holding device (10) consists of a pair of rams (10a) arranged in opposition.

6. Device according to claim 5, **characterised in that** the rams (10a) are connected with the auxiliary shaft (11) by rotatably mounted connecting rods (12) for movement of the rams (10a) in axial direction.

7. Device according to claim 5 or 6, **characterised in that** the rams (10a) are each time movable axially relative to one another in mutual opposition.

8. Device according to claim 6 or 7, **characterised in that** the connecting rods (12) are drivable by cam discs (14).

9. Device according to at least one of claims 5 to 8, **characterised in that** each ram (10a) has a respective receiving surface (13) with a form adapted at least in part to a contour of the article (1).

10. Device according to at least one of claims 5 to 9, **characterised in that** the shape of the receiving surface (13) of the rams (10a) is substantially concave.

11. Device according to at least one of claims 1 to 10, **characterised in that** the receiving device (9) is rotatable about an axis of symmetry (6c), which is oriented radially and perpendicularly to the first axis (6) of rotation, of the rotary head (2).

12. Device according to at least one of claims 1 to 11, **characterised in that** the receiving devices (9) are arranged at the rotary head (2) at the same spacings relative to one another which correspond with the spacing between the articles (1) on the first conveying device (3).

13. Device according to at least one of claims 1 to 12, **characterised in that** the first conveying device (3) is a conveying belt or a conveying chain or a combination of the two.

14. Device according to at least one of claims 1 to 13, **characterised in that** the second conveying device (5) comprises a plurality of gripper heads (7), which is mounted to be rotatable about an axis of rotation in opposite rotational direction to the rotation device (4).

15. Device according to claim 14, **characterised in that** the gripper heads (7) are arranged at spacings relative to one another which correspond with the spacings between the receiving devices (9) at the rotary head (2).

16. Device according to at least one of claims 1 to 15, **characterised in that** the article (1) in the delivery position (Y) has a position which is rotated relative to the receiving position (X) about the second axis (6a) of rotation in such a manner that a head end of the article (1) points substantially radially outwards.

17. Device according to at least one of claims 1 to 15, **characterised in that** the article (1) in the delivery position (Y) has a position which is rotated relative to the receiving position (X) about the second axis (6a) of rotation in such a manner that a side surface of the article (1) points substantially radially outwards.

18. Method of receiving small-size articles (1) from a first conveying device (3) and transferring the articles (1) to a second conveying device (5), wherein the article (1) is transported along the conveying plane (A) to a receiving position (X) at which the article (1) is received by a receiving device (9), which is mounted at a rotary head (2), and is transferred by rotation of the rotary head (2) about a first axis (6) of rotation from the receiving position (X) to a delivery position (Y), and wherein the article (1) during the transfer is rotated about the first axis (6) of rotation and simultaneously, especially continuously, about a second axis (6a) of rotation parallel to the main axis (6) of rotation and about a third axis (6b) of rotation parallel to the axis (6a) of rotation of the receiving device, **characterised in that** the receiving device is arranged between two mutually spaced circumferential sections (2a, 2b) of the rotary head (2).

19. Method according to claim 18, **characterised in that** the article (1) is rotated from the receiving position (X) to the delivery position (Y) substantially 180° about the second axis (6a) of rotation.

20. Method according to claim 18 or 19, **characterised in that** the article (1) is rotated from the receiving position (X) to the delivery position (Y) substantially 90° about the first axis (6) of rotation.

21. Method according to at least one of claims 18 to 20, **characterised in that** the article (1) is rotated along the circular movement path in one direction referred to the third axis (6b) of rotation and in a direction opposite thereto referred to the first and the second axis (6, 6a) of rotation.

22. Method according to at least one of claims 18 to 21, **characterised in that** the receiving device (9) is rotated along the circular movement path simultaneously about the second axis (6a) of rotation and about an axis (6c) of symmetry, which is oriented perpendicularly thereto, of the rotary head (2).

## Revendications

1. Dispositif pour la réception d'articles (1) de petite taille provenant d'un premier dispositif de transport (3) et pour le transfert des articles (1) vers un deuxième dispositif de transport (5), dans lequel est prévu un dispositif rotatif (4) qui est disposé de manière à pouvoir tourner autour d'un premier axe de rotation (6) et qui présente une tête pivotante (2) comprenant une pluralité d'éléments de réception (9) disposés successivement sur la circonférence de la tête pivotante (2), chaque élément de réception (9) pouvant tourner autour d'un deuxième axe de rotation (6a) parallèle au premier axe de rotation (6) et présentant un dispositif de retenue d'articles (10) qui est disposé quant à lui de manière à pouvoir tourner autour d'un troisième axe de rotation (6b) parallèle au premier axe de rotation (6), **caractérisé en ce que** la tête pivotante (2) présente une première section de circonférence (2a) et une deuxième section de circonférence (2b) distante de la première, l'élément de réception (9) étant disposé entre les sections de circonférence (2a, 2b).

2. Dispositif selon la revendication 1, **caractérisé en ce que** les deux sections (2a, 2b) sont disposées de manière symétrique l'une par rapport à l'autre et qu'elles forment un espace intermédiaire.

3. Dispositif selon l'une des revendications 1 ou 2, **caractérisé en ce que** l'élément de réception (9) présente un boîtier (9a), l'élément de réception (9) étant relié de manière pivotante à la tête pivotante (2) par l'intermédiaire d'un arbre secondaire (11) dans une partie du fond (9b) du boîtier (9a).

4. Dispositif selon la revendication 3, **caractérisé en ce qu'**un dispositif de retenue d'articles (10) est disposé au niveau d'une extrémité ouverte du boîtier (9a).

5. Dispositif selon au moins l'une quelconque des revendications 1 à 4, **caractérisé en ce que** le dispositif de retenue d'articles (10) est composé d'une paire de pistons (10a) disposés en vis-à-vis.

6. Dispositif selon la revendication 5, **caractérisé en ce que** les pistons (10a) sont reliés à l'arbre secondaire (11) par l'intermédiaire de bielles (12) pivotantes pour déplacer les pistons (10a) dans la direction axiale.

7. Dispositif selon la revendication 5 ou 6, **caractérisé en ce que** les pistons (10a) peuvent être déplacés dans le sens axial en sens inverse l'un par rapport à l'autre.

8. Dispositif selon la revendication 6 ou 7, **caractérisé en ce que** les bielles (12) peuvent être actionnées par des disques à cames (14).

9. Dispositif selon au moins l'une quelconque des revendications 5 à 8, **caractérisé en ce que** chaque piston (10a) présente une surface de réception (13) ayant une forme adaptée, au moins en partie, à un contour de l'article (1).

10. Dispositif selon au moins l'une quelconque des revendications 5 à 9, **caractérisé en ce que** la forme de la surface de réception (13) des pistons (10a) est essentiellement concave.

11. Dispositif selon au moins l'une quelconque des revendications 1 à 10, **caractérisé en ce que** l'élément de réception (9) peut tourner autour d'un axe de symétrie radiale (6c) de la tête pivotante (2) perpendiculaire au premier axe de rotation (6).

12. Dispositif selon au moins l'une quelconque des revendications 1 à 11, **caractérisé en ce que** les éléments de réception (9) sont disposés à distance égale les uns des autres sur la tête pivotante (2), les distances correspondant à celles entre les articles (1) sur le premier dispositif de transport (3).

13. Dispositif selon au moins l'une quelconque des revendications 1 à 12, **caractérisé en ce que** le premier dispositif de transport (3) est une bande transporteuse ou une chaîne transporteuse ou une combinaison des deux.

14. Dispositif selon au moins l'une quelconque des revendications 1 à 13, **caractérisé en ce que** le deuxième dispositif de transport (5) présente une pluralité de têtes de préhension (7) qui peuvent tourner autour d'un axe de rotation dans le sens opposé au dispositif rotatif (4).

15. Dispositif selon la revendication 14, **caractérisé en ce que** les têtes de préhension (7) sont disposées les unes par rapport aux autres avec des distances qui correspondent aux distances entre les éléments de réception (9) sur la tête pivotante (2).

16. Dispositif selon au moins l'une quelconque des revendications 1 à 15, **caractérisé en ce que** dans la position de distribution (Y), l'article (1) présente une position tournée autour de l'axe de rotation (6a) par rapport à la position de réception (X), de sorte qu'une extrémité de l'article (1) est orientée essentiellement radialement vers l'extérieur.

17. Dispositif selon au moins l'une quelconque des revendications 1 à 15, **caractérisé en ce que** dans la position de distribution (Y), l'article (1) présente une position tournée autour de l'axe de rotation (6a) par rapport à la position de réception (X), de sorte qu'une surface latérale de l'article (1) est orientée essentiellement radialement vers l'extérieur.

18. Procédé pour la réception d'articles (1) de petite taille provenant d'un premier dispositif de transport (3) et pour le transfert des articles (1) vers un deuxième dispositif de transport (5), dans lequel l'article (1) est transporté le long du plan de transport (A) jusqu'à une position de réception (X), où l'article (1) est réceptionné par un élément de réception (9) disposé sur une tête pivotante (2) et est transféré, par la rotation de la tête pivotante (2) autour d'un premier axe de rotation (6), à partir de la position de réception (X) jusqu'à une position de distribution (Y), et dans lequel l'article (1) tourne, pendant le transfert, autour du premier axe (6) et simultanément, en particulier en continu, autour d'un deuxième axe (6a) parallèle à l'axe de rotation principal (6) et autour d'un troisième axe de rotation (6b) parallèle à l'axe de rotation de l'élément de réception (6a), **caractérisé en ce que** l'élément de réception est disposé entre deux sections de la circonférence (2a, 2b) de la tête pivotante (2) distantes l'une de l'autre.

19. Procédé selon la revendication 18, **caractérisé en ce que** l'article (1) tourne, à partir de la position de réception (X) jusqu'à la position de distribution (Y), pratiquement de 180° autour du deuxième axe de rotation (6a).

20. Procédé selon la revendication 18 ou 19, **caractérisé en ce que** l'article (1) tourne, à partir de la position de réception (X) jusqu'à la position de distribution (Y), pratiquement de 90° autour du premier axe de rotation (6a).

21. Procédé selon au moins l'une quelconque des revendications 18 à 20, **caractérisé en ce que** l'article (1) tourne, le long de la trajectoire circulaire, dans un sens par rapport au troisième axe de rotation (6b) et dans le sens opposé à celui-ci par rapport aux premier et deuxième axe de rotation (6, 6a).

22. Procédé selon au moins l'une quelconque des revendications 18 à 21, **caractérisé en ce que** l'élément de réception (9) tourne, le long de la trajectoire circulaire, simultanément autour du deuxième axe de rotation (6b) et autour d'un axe de symétrie (6c) de la tête pivotante (2) perpendiculaire à celui-ci.
